# EUROPEAN PATENT SPECIFICATION

(11) **EP 3 715 189 B1**
(45) Date of publication and mention of the grant of the patent: **30.07.2025**
(21) Application number: 20164823.5
(22) Date of filing: 23.03.2020
(51) Int. Cl.: B60R 25/10

(54) **VEHICLE COMPARTMENT MONITORING DEVICE, SYSTEM AND ASSOCIATED METHOD**
FAHRZEUGRAUMÜBERWACHUNGSVORRICHTUNG, SYSTEM UND ZUGEHÖRIGES VERFAHREN
DISPOSITIF DE SURVEILLANCE DE COMPARTIMENT DE VÉHICULE, SYSTÈME ET PROCÉDÉ ASSOCIÉ

(30) Priority: 25.03.2019 IT 201900004303
(43) Date of publication of application: 30.09.2020
(73) Proprietor: Vodafone Automotive S.p.A., 21100 Varese (VA) (IT)
(72) Inventor: PREVIATI, Renzo, 21100 Varese (IT)
(74) Representative: Boult Wade Tennant LLP

(56) References cited:
- WO-A1-2010/040203
- WO-A2-2009/010872
- CA-A1- 2 239 928
- US-A1- 2005 285 790
- US-A1- 2008 143 529

## Description

### FIELD

The present disclosure relates to the field of electronic components and systems for vehicles, in particular for automotive; in detail, the present disclosure relates to a vehicle compartment monitoring device, to a vehicle compartment monitoring system and to a vehicle compartment monitoring method.

### BACKGROUND

Vehicles comprise a plurality of compartments that are typically provided with openable doors, which define a first closed configuration wherein the compartment includes a limited space and a second opened configuration wherein the compartment is open to external environment. Among the compartments of the vehicles, there are for example engine bays, trunks, cabins for cars or for commercial vehicles, engine rooms or cabins for boats, cockpit rooms for airplanes, or merchandise bays for trailers or semi-trailers.

Vehicles are subject to thefts, and many types of antitheft protection devices have been developed through the last decades. Among antitheft protection devices, there are devices conceived to detect the opening of a door or the access or motion into one of the compartments, e.g. the vehicle's cabin. Many of the vehicles are the subject of an unauthorised entry into compartments, in particular to the cabin, when there is an attempted theft.

Also beyond criminal actions, there is the need of knowing whether compartments of vehicles are opened or closed. For example, in specific types of vehicles like boats, accidental or voluntary opening of certain compartments, e.g. garage bays of ferry boats during navigation, may lead to harmful situations and should therefore be promptly detected. In another example, accessing to luggage compartment in a commercial airplane during the flight should be promptly detected and signalled to the captain or flight crew.

Some systems have been designed to be physically in contact with the openable portion of compartment, so that they can activated when a compartment is opened. For example, a bonnet switch - for instance mechanical or magnetic - can be used on the engine compartment of a vehicle. When the bonnet is opened or lifted, the switch will be moved and thus activated. This can then trigger the alarm. Protecting the bonnet compartment is generally considered as important as some of the alarm or siren system can be located in this compartment. Accordingly, detecting access to the bonnet (with a view to preventing anyone from tampering with such a system) can be paramount to the security of the entire vehicle.

Such mechanical or magnetic switches will usually be positioned on the doors and on the respective frames of compartments, with a view to performing the above detection. Mechanical switches or magnetic switches have some drawbacks which include malfunctioning caused by humidity or rustiness; in addition, or in consequence, they have typically a very limited lifespan and their correct operation mostly depends on the correct installation. Those switches therefore can either easily fail in detecting the opening of the door, or - on the contrary - very easily could lead to false positive alarms of door opening. The limited lifespan of such devices, and in particular the fact that their lifespan is generally expected to be shorter than that of the vehicle they are mounted on, means that they have to be replaced one or even several times during the life of the vehicle. In addition, their use involves performing mechanical actions on supports, e.g. the door's frame, which sometimes are not advisable, for mounting such devices on vehicles. When for example mechanical switches are installed in correspondence of the bonnet of the vehicle, they shall be physically connected e.g. by perforating holes in the body of the vehicle to creating fixing means. In terms of safety, this operation could result in a decay of the performances of structural integrity or shock absorption. Additionally, mechanical or magnetic switches, due to their installation on the door and thus near the opening, can sometimes be easily tampered with, which reduces their effectiveness.

Mechanical or magnetic switches, when installed in correspondence of the doors of compartments only detect if the door is open or close, and are not necessarily suitable to identify the amount of opening of the door or any intermediate condition between a full closure and an opening.

Human presence detection devices can also sometimes be used. Such devices can use ultrasounds in order to monitor the presence of humans in a compartment; those devices typically employ volumetric sensors, but do not fully allow detecting small openings of compartment doors.

US2008/0007404 discusses a system used to detect the position of a human in a room. This system uses a radio source, e.g. a WiFi modem, and a plurality of sensor directively oriented towards the source, to monitor the path of the human in the room through the analysis of the received signal strength.

Another document, US2012/0146788 discusses a motion and presence detection system which is provided with a plurality of nodes transmitting a wireless signal, and with a computer device receiving a plurality of reported values of signal strength to detect motion and presence within an area of interest.

None of these devices can perform a detection of whether the compartment is actually opened or closed in a reliable manner.

The present disclosure aims to provide a device, a system and a method of compartment monitoring which help to solve the aforementioned drawbacks.

It is noteworthy that this background section is only for setting out some of the technical challenges faced. The arrangements discussed above should not be construed as being part of the state of the art simply because they are discussed in this section. Conversely, some aspects of the above description may for example not have been made available to the public and should therefore not be construed as such.

CA2239928A1 discloses an apparatus for monitoring opening of sealed containers.

### SUMMARY OF THE INVENTION

The invention is defined by the appended claims. A number of examples useful for understanding the invention (but not necessarily within the scope of the invention) are also provided below.

According to a first aspect of the present disclosure, there is disclosed a vehicle compartment monitoring device according to claim 1.

According to some examples, a vehicle compartment monitoring device comprises:
- a first electronic unit (10), configured to be installed in an openable compartment (102; 103) of a vehicle (100) and comprising a receiver module (12) configured to receive a radio signal (200) from a remotely positioned second electronic unit (20);
- said first electronic unit (10) being configured to detect, in a detection mode, whether the openable compartment (102; 103) is in a closed or open configuration, and being configured to calculate or measure a signal strength for the received radio signal (200) and to electronically and to automatically compare the measured signal strength with a predefined threshold (500) of radio signal strength, said signal strength being used as an indicator of at least said open or closed configuration for said openable compartment (102; 103);
- said first electronic unit (10) being further configured to trigger an activation of an alarm signal (A) based on the comparison of the strength of said radio signal (200) with said threshold (500).

According to a further non-limiting aspect, said first electronic unit (10) is configured to trigger the activation of said alarm signal (A) when said receiver module (12) receives a signal with a frequency below, or above, said threshold (500).

According to a further non-limiting aspect, the device comprises a preliminary measurement mode wherein said first electronic unit (10) is configured to perform a measurement of radio noise (600) strength and to set or cause the setting of said threshold (500) based on the measurement of radio noise (600) strength.

According to a further non-limiting aspect, the first electronic unit (10) is configured to derive a reference noise value from the measurement of radio noise strength and to set the threshold (500) based on the reference noise value. For example, the reference noise value can be derived using one or more of: an average value, a median value, a maximum value, a peak value, a peak-to-peak value and a root mean square value for all or some of the noise measurement values obtained from the measurement of radio noise strength.

In some examples, the measurement of radio noise (600) strength is performed over a measurement window of a predetermined length, less than 1 minute long, or less than 45 seconds long, or less than 30 seconds long.

According to a further non-limiting aspect, the first electronic unit (10) is configured to detect whether said compartment (102; 103) is open or closed, and to allow the switching of the first preliminary measurement configuration only when said compartment is closed.

According to a further non-limiting aspect, the first electronic unit (10) is configured to store at least temporarily signal strength data derived from the calculation or measurement of said signal strength, and is configured to trigger the activation of said alarm signal (A) at the moment the strength of said received radio signal (200) or said signal strength data goes below, or above, said threshold (500).

According to a further non-limiting aspect, the measurement of radio noise (600) strength is performed over a measurement window of a predetermined length, less than 1 minute long, or less than 45 seconds long, or less than 30 seconds long, and said first electronic unit (10) may also be configured to calculate an average of a plurality of sampled values of radio noise (600) strength captured within said measurement window.

According to a further non-limiting aspect, said threshold (500) is set in accordance with said average of said plurality of sampled values of radio noise (600) strength.

According to a further non-limiting aspect, said first electronic unit (10) is configured to set the signal strength threshold (500) at a predetermined level above the reference value for said measured radio noise (600) strength, optionally at least 1.5 dBm, or at least 1.8dBm, or at least 2dBm, or at least 2.5dBm, or at least 3dBm, or at least 4.8dBm, or at least 5dBm, higher than said reference value for the measured radio noise (600) strength, or optionally at least 1.4 times, or at least 1.5 times, or at least 1.6 times, or at least 1.8 times, or at least 2 times, or at least 3 times, or at least 3.2 times higher than the reference value for said measured radio noise (600).

According to a further non-limiting aspect, said first electronic unit (10) is configured to set the signal strength threshold (500) at least 1.1 times, or 1.58 times, or 2 times, or 3.16 times higher than the value of said reference value for the measured radio noise (600).

It is noteworthy that, in cases where a drop in the signal strength may trigger the activation of the alarm, then the threshold may be set to be equal to or less than the reference noise value. For example, the teachings provided above can apply equally, replacing "above" and "higher than" by "below" and "less than", respectively.

According to a further non-limiting aspect, said device, preferably said first and/or second electronic unit, is configured to define a plurality of samples within said measurement window, to measure a received radio noise (600) strength in correspondence of said samples obtaining noise sampled data, to calculate an average or a filtered average of said noise sampled data, and to set or cause the setting of said threshold (500) in accordance with said average or filtered average.

According to a further non-limiting aspect, said signal strength is a quantitative measurement of received power and/or voltage, and/or is a qualitative measurement of received radio signal strength, and/or is an RSSI measurement.

According to a further non-limiting aspect, the vehicle compartment (102; 103) is a compartment comprising at least a door selectively movable between a first closed configuration confining the compartment, in particular confining the inner volume of the compartment, and a second open configuration opening the compartment.

According to a further non-limiting aspect, said compartment (102; 103) comprises an engine bay, and/or a trunk and/or a cabin and/or a luggage or merchandise bay.

According to a further non-limiting aspect, said vehicle comprises at least one among said types of vehicles: road vehicles, in turn comprising, cars, SUVs, trucks, commercial vehicles, pickups, sport cars, trailers or semi-trailers; airplanes; helicopters; vessels.

According to a further non-limiting aspect, the device comprises a first armed operative configuration wherein the receiver module (12) is activated for receiving said radio signal (200), and a second non-armed configuration wherein at least the receiver module (12) is deactivated; said first electronic unit (10) being configured to perform the measurement of said radio noise (600) strength after the switching to said first armed operative configuration and when in said preliminary measurement mode, said device, or said first electronic unit (10), is configured to reset said threshold (500) after each switching to said second non-armed configuration.

According to a further non-limiting aspect, the device comprises an audible alarm device (30), operatively connected to said first electronic unit (10) for receiving, when transmitted, said alarm signal; said alarm device (30) being configured to produce an audible sound when receiving said alarm signal.

According to a further non-limiting aspect, said audible alarm device (30) is electrically connected to said first electronic unit (10), and said alarm signal is an electric alarm signal.

According to a further non-limiting aspect, said audible alarm device (30) comprises a piezoelectric siren or an electromagnetic siren or a pneumatic siren.

According to a further non-limiting aspect, said radio signal (200) is a UHF radio signal, preferably a Bluetooth ^{®} radio signal, more preferably complying with the Bluetooth ^{®} low energy protocol, or an analogue signal, or a numeric signal, or a packet signal.

According to a further non-limiting aspect, said radio signal (200) comprises at least one, preferably a plurality of, numeric packet(s) or data unit(s), and wherein said numeric packet(s) or data unit(s) comprise in turn a plurality of fields wherein at least one field is a power signalling dedicated field.

According to a further non-limiting aspect said first electronic unit (10) further comprises a transmitter module (14), configured to transmit a radio signal (200) towards a remote receiver and to include at least once, and optionally at predetermined intervals, in said transmitted radio signal (200) electronic data comprising radio signal strength indicator.

According to a further non-limiting aspect, the radio signal strength indicator is an indicator of the strength of the received radio signal.

According to a further non-limiting aspect, said power signalling dedicated field comprises said data comprising radio signal strength indicator and/or is configured to store said data comprising radio signal strength indicator.

According to a further non-limiting aspect, said radio signal (200) is a complex radio signal comprising at least one data unit comprising at least one field specifically configured to store radio signal strength data, in particular the strength of the radio signal (200) received by said first electronic unit (10); said first electronic unit (10) being further configured to retransmit said complex radio signal through said transmitter module (14).

According to a further non-limiting aspect, the first electronic unit (10) is configured to receive a radio signal (200) in turn comprising electronic data comprising radio signal (200) strength measurements, and is configured to extract said radio signal (200) strength measurement from said radio signal (200) and to subsequently produce in output an alarm signal (A) upon a reception of said radio signal (200) having strength below, or above, said threshold (500).

According to a further non-limiting aspect, said first electronic unit (10) comprises electric inputs for electrically powering at least said receiver module and/or at least one battery, electrically connected to said receiver module (12) and configured to feed said module with a sufficient amount of electric power for a predetermined period of time. According to a further non-limiting aspect, said battery is further configured for feeding said alarm device for a predetermined period of time, at least in correspondence of reception of said alarm signal.

According to a further non-limiting aspect, said device comprises a body housing the first electronic unit and the alarm device, said body being optionally tamper-resistant, or waterproof or dustproof.

According to a further non-limiting aspect, said device comprises at least one ultrasonic or hyperfrequency sensor configured to detect intrusions within said compartment (102; 103); said device being configured to trigger an activation of the alarm signal (A) upon:
- a reception of said radio signal (200) having a predetermined strength with respect to said threshold (500), preferably below, or above, said threshold (500); and/or
- a detection of intrusion within said compartment (102; 103) by said ultrasonic and/or hyper frequency sensor.

According to a further non-limiting aspect, said device is configured to trigger an activation of the alarm signal upon:
- a reception of said radio signal (200) having a predetermined strength with respect to said threshold (500), preferably below, or above, said threshold (500); and
- a detection of intrusion within said compartment (102; 103) by said ultrasonic or hyper frequency sensor, said detection of intrusion being simultaneous or concurrent with the reception of the radio signal (200) having a predetermined strength with respect to said threshold (500), preferably below, or above, said threshold (500).

According to a further non-limiting aspect, the device comprises an interface for said at least one ultrasonic or hyperfrequency sensor, or a vehicle bus interface, preferably a CAN-bus interface or an interface complying with EIA RS-485 standard, said interface being configured to allow at least the reception of intrusion data transmitted by said at least one ultrasonic or hyperfrequency sensor.

According to a further non-limiting aspect, said radio signal (200) is ciphered or comprises at least one cyphered portion, said cyphered portion being preferably ciphered through a public and private ciphering algorithm or with a stream ciphering encoder.

According to the present disclosure, there is further disclosed a vehicle compartment monitoring system, comprising:
- a first electronic unit (10), according to one or more of the preceding aspects;
   - a second electronic unit (20), configured to be installed in the compartment (102; 103) of the vehicle (100) and comprising a transmitter module (24) configured to transmit the radio signal (200) to the first electronic unit (10)According to a further non-limiting aspect, at least said first electronic unit (10) is configured to trigger the activation of said alarm signal (A) when said receiver module (12) receives a signal with a frequency below, or above, said threshold (500).

According to a further non-limiting aspect, the first electronic unit (10) and the second electronic unit (20) both comprise at least a transmitter module and a receiver module, respectively configured to transmit and receive said radio signal (200); said first electronic unit and said second electronic unit being configured to calculate at least a signal strength for the received radio signal (200) and to electronically and automatically compare the strength of the received radio signal (200) with a predefined threshold (500) of radio signal strength.

According to a further non-limiting aspect, the second electronic unit (20) is configured to:
- trigger an activation of an alarm signal (A) through an electronic comparison of a strength of said radio signal (200) with said threshold (500); or
- transmit to said first electronic unit (20) a radio alarm signal comprising data indicating the reception of a radio signal (200) at a predetermined level with respect to said threshold (500), for causing said first electronic unit (10) automatically trigger the activation of the alarm signal (A) upon reception of said radio alarm signal or for causing said first electronic unit (10) further perform a calculation or measurement of the strength of said radio alarm signal with said threshold (500) for activating said alarm signal (A).

According to a further non-limiting aspect, said second electronic unit (20) is configured to trigger the activation of said alarm signal (A) when said receiver module (12) receives a signal with a frequency below, or above, said threshold (500).

According to a further non-limiting aspect, said radio alarm signal is a part of a complex signal, or is a part of a numeric signal or part of a protocol data unit.

According to a further non-limiting aspect, said first and/or second electronic unit (10; 20) are independently configured and/or capable of triggering the activation of said alarm signal (A).

According to a further non-limiting aspect, said first electronic unit (10) comprises at least an audible alarm device (30), operatively connected to said first electronic unit (10), said alarm device being configured to produce an audible sound at least when receiving said alarm signal.

According to a further non-limiting aspect, said second electronic unit (20) comprises at least an audible alarm device (30), operatively connected to said second electronic unit (20), said alarm device being configured to produce an audible sound at least when receiving said alarm signal.

According to a further and non-limiting aspect, said audible alarm device (30) comprises a pneumatic horn or siren, and/or an electromagnetic horn or siren and/or a piezoelectric horn or siren.

According to the present disclosure, there is further disclosed a use of a device or system according to one or more of the preceding aspects, for performing a detection of intrusion within a compartment of a vehicle (100) or as an antitheft system for said vehicle (100) or as an integration to a previously installed antitheft system of said vehicle (100).

According to the present disclosure, there is further disclosed a vehicle (100) comprising a body (101) defining at least one compartment (102; 103) having at least a door selectively movable between a first closed configuration confining the compartment, in particular confining the inner volume of the compartment, and a second open configuration opening the compartment; said vehicle (100) being characterized in that it comprises a device or a system according to one or more of the previous aspects.

According to a further non-limiting aspect, said vehicle comprises and/or is a land mobile vehicle, in turn comprising a car or a SUV or a utility vehicle or a commercial vehicle, or a truck, or a trailer or semi-trailer, or a caravan or an autocaravan; or a naval vehicle or an aircraft vehicle, in turn comprising an helicopter or an airplane or an unmanned aircraft.

According to a further aspect is therefore disclosed a vehicle compartment monitoring method, according to claim 11.

According to some examples, a vehicle compartment monitoring method comprises:
- receiving a radio signal (200) transmitted by a remote electronic unit installed in an openable compartment (102; 103) of a vehicle (100), said receiving being performed by a receiver module (12) of a first electronic unit (10) configured to be installed in a compartment of a vehicle (100);
- calculating or measuring at least a signal strength for the received radio signal (200), obtaining signal strength data, and to electronically and automatically compare the signal strength data with a predefined threshold (500) of radio signal strength, said signal strength data being indicator at least of whether the compartment (102; 103) is in an opened or closed configuration, and
- activating an alarm signal (A) based on the automatic comparison of the signal strength data with the predefined threshold (500).

According to a further non-limiting aspect, triggering the activation of the alarm signal is performed in case said radio signal strength goes below, or above, said threshold (500), said triggering being made by said first electronic unit (10).

According to a further non-limiting aspect, any of the steps of receiving the radio signal (200), or the step (1003) of calculating or measuring the signal strength, or the step of triggering the activation of the alarm signal (A) are performed when the first electronic unit (10) is in a detection mode.

According to a further non-limiting aspect, the method comprises receiving the signal strength data from a further electronic unit (20), remotely installed with respect said first electronic unit (10); the method further comprises comparing the signal strength data with a further measurement of signal strength related to the signal transmitted by the further electronic unit (20), said step of comparing being performed by said first electronic unit (10); the activation of the alarm signal (A) being triggered when both said signal strength data and said further measurement of signal strength are, each one, below, or above, said threshold (500).

According to a further non-limiting aspect, the activation of the alarm signal takes place when, in particular only when the signal strength data transmitted by the first electronic unit to the further electronic unit to the further measurement of signal strength are both below, or above, said threshold (500).

According to a further non-limiting aspect, the further measurement of signal strength is performed by said further electronic unit.

According to a further non-limiting aspect, the further measurement of signal strength is performed by a second electronic unit (200) of a vehicle compartment monitoring system, wherein both the first and the second unit are installed in a predetermined zone of a compartment (102; 103) of the vehicle (100).

According to a further non-limiting aspect, the further electronic unit performs a step of calculating or measuring a signal strength for the received radio signal (200) and electronically and automatically comparing the signal strength data with a predefined threshold (500) of radio signal strength, said signal strength data being used as an indicator of whether the compartment (102; 103) is in an open or closed configuration.

According to a further non-limiting aspect, the method comprises triggering an activation of an alarm signal (A) based on the automatic comparison of the signal strength data with the predefined threshold (500).

According to a further non-limiting aspect, the step of the transmitted signal strength data with a further measurement of signal strength comprises comparing the signal strength data transmitted by the first electronic unit with said threshold (500) and comprises comparing the auxiliary signal strength data with said threshold (500), the activation of said alarm signal taking place when both the comparisons are at least temporarily below, or above, said threshold (500).

According to a further non-limiting aspect, the method comprises performing (1001) a preliminary measurement of radio noise (600) strength, made by said first electronic unit or made by a receiver module (12) of said first electronic unit (10), said method further comprising setting said threshold (500) in accordance with the measurement of said radio noise (600) strength.

According to a further non-limiting aspect, said performing said preliminary measurement is performed by setting a preliminary measurement mode at least for said first electronic unit (10), said preliminary measurement mode differing from said detection mode.

According to a further non-limiting aspect, the method comprises a step of electronically calculating a threshold (500) in accordance with the measurement of a radio noise (600) strength, wherein said threshold (500) is calculated or set to be based on a reference noise value derived from the measurement of the radio noise (600) strength.

According to a further non-limiting aspect, the method comprises a step of storing the threshold (500) in a non-transitory memory.

According to a further non-limiting aspect, said radio signal is transmitted in a frequency band.

According to a further aspect, said strength for the received radio signal (200) is measured in a frequency band; wherein said strength for the received radio signal (200) is measured in said frequency band.

According to a further aspect of the present disclosure, the band is comprised in the UHF band or the SHF band.

According to a further non-limiting aspect, the measurement of radio noise (600) strength is performed over a measurement window of a predetermined length, less than 1 minute long, or less than 45 seconds long, or less than 30 seconds long.

According to a further non-limiting aspect, the step of preliminary measurement of radio noise (600) strength is preceded by a step of closure of said compartment and/or of closure of the door of said compartment, to configure the compartment in a closed configuration wherein it defines a limited volume and/or there is no substantial communication with the inner volume of said compartment and the external environment.

According to a further non-limiting aspect, the method comprises:
- defining a predefined number of samples within said measurement window, said samples being spaced one another by a predefined amount of time;
- preforming said measurement of radio noise (600) strength by sampling a received radio noise (600) in correspondence of said samples, obtaining a plurality of noise (600) samples,
- performing an average or a filtered average of said plurality of noise samples to obtain a data, in particular an average noise data, to obtain a final noise data with respect to which set said threshold (500).

According to a further non-limiting aspect, at least said first electronic unit (10) comprises a first armed operative configuration wherein the receiver module (12) is activated for receiving said radio signal, and a second non-armed configuration wherein at least the receiver module (12) is deactivated; said step of measurement of said radio noise (600) strength taking place after the switching to said first armed operative configuration, and/or the method comprises a step of resetting said threshold (500) after each switching to said second non-armed configuration.

According to a further non-limiting aspect, the method comprises setting said signal strength threshold (500) at a predetermined level above a reference value for said radio noise (600) strength, and/or said final noise data, optionally at least 1.5 dBm, or at least 1.8dBm, or at least 2dBm, or at least 2.5dBm, or at least 3dBm, or at least 4.8dBm, or at least 5dBm, higher than said reference value for the measured radio noise (600) strength, or optionally at least 1.4 times, or 1.5 times, or at least 1.6 times, or at least 1.8 times, or at least 2 times, or at least 3 times, or at least 3.2 times higher than the reference value for said measured radio noise (600) strength.

According to a further non-limiting aspect, the method comprises setting said signal strength threshold (500) at least 1.1 times, or 1.58 times, or 2 times, or 3.16 times higher than the reference value for said measured radio noise (600) strength.

As mentioned above, depending on whether the alarm activation is triggered by the signal measurement being more than or less than the threshold, the threshold can be set to be more than or less than the reference noise value, respectively.

According to a further non-limiting aspect, the method comprises a step of activating a transmitter module (14; 24) to transmit a radio signal towards a remote receiver, and to include (1004) in said transmitted radio signal electronic data comprising radio signal strength previously measured for said received radio signal (200).

According to a further non-limiting aspect, the method comprises a step of electronically extracting from the received radio signal a radio strength measurement data, and comprises a subsequent step of comparing said extracted radio strength measurement data with said threshold (500) and activating the alarm signal through the comparison of the radio strength measurement data with said threshold (500).

According to a further aspect, activating the alarm signal is performed if said radio signal (200) strength is below, or above, said threshold (500).

According to a further non-limiting aspect, activating (1006) said alarm signal (A) comprises at least activating an acoustic alarming device for a predetermined amount of time, or causes the activation, in particular the immediate automatic activation of said acoustic alarming device (30).

According to a further non-limiting aspect, the method comprises a step of operatively connecting at least one ultrasonic or hyperfrequency sensor to said first electronic unit (10) in such a way that said ultrasonic and/or hyperfrequency sensor is capable of detecting, or specifically configured to detect, an intrusion within said compartment (102; 103); the triggering of said alarm signal (A) taking place when:
- at least temporarily said radio signal strength goes below, or above, said threshold (500), or the radio signal strength is at a predetermined level with respect to said threshold (500), said activation being made by said first electronic unit (10) or
- temporarily said ultrasonic and/or hyperfrequency sensor detects said intrusion.

According to a further non-limiting aspect, the method comprises a step of installing said at least one ultrasonic or hyperfrequency sensor within said compartment (102; 103), in such a way said sensor is arranged and/or oriented in a fixed spatial position with respect to the compartment (102; 103).

According to a further non-limiting aspect, the method comprises a step of establishing an electronic and/or operative connection with said ultrasonic or hyperfrequency sensor, said connection being a vehicle bus connection or being performed through the vehicle bus.

According to a further non-limiting aspect, the method comprises transmitting intrusion data, at least in case said ultrasonic or hyperfrequency sensor detects said intrusion in said compartment (102; 103), preferably on said vehicle bus.

According to a further non-limiting aspect, the method comprises a step of ciphering said radio signal (200) before transmission by said transmitter module (14; 24) and/or a step of deciphering said radio signal (200) after reception by said receiver module (12; 22), said ciphering being a public and private key ciphering and/or a stream ciphering; said deciphering being a public and private key deciphering and/or a stream deciphering.

According to a further aspect is therefore disclosed computer program product, stored in a non-transitory memory support, and suitable to be run on a data processing unit; said computer program product comprising software code portions for causing the execution of one or more of the steps described in the previous aspects.

More in detail, according to a further aspect is therefore disclosed computer program product, stored in a non-transitory memory support, and suitable to be run on a data processing unit; said computer program product comprising software code portions for causing the execution of:
- a step of receiving a radio signal transmitted by a remote electronic unit (20) installed in an openable compartment (102; 103) of a vehicle (100), said receiving being performed by a receiver module (12) of a first electronic unit (10) configured to be installed in a compartment of a vehicle (100);
- a subsequent step of calculating and/or measuring at least a signal strength for the received radio signal obtaining signal strength data, and to electronically and automatically compare the signal strength data with a predefined threshold (500) of radio signal strength in order to detect whether the compartment (102; 103) is opened or closed, and
- activating an alarm signal (A) based on the automatic comparison of the signal strength data with the predefined threshold (500).

According to a further non-limiting aspect, activating the alarm signal is performed in case at least temporarily said radio signal strength goes below, or above, said threshold (500), said activation being made by said first electronic unit (10).

According to a further non-limiting aspect, the computer program product causes the execution of a step of transmitting the signal strength data towards a further electronic unit, remotely installed with respect said first electronic unit; the method further comprises a step of comparing the transmitted signal strength data with a further measurement of signal strength.

According to a further non-limiting aspect, the activation (1006) of the alarm signal takes place when, in particular only when the signal strength data transmitted by the first electronic unit (10) to the remote electronic unit (20) and the further measurement of signal strength are both below, or above, said threshold (500).

According to a further non-limiting aspect, the further measurement of signal strength is performed by said remote electronic unit (20).

According to a further non-limiting aspect, the further measurement of signal strength is performed by a second electronic unit of a vehicle compartment monitoring system, wherein both the first and the second unit are installed in predetermined zone of a compartment (102; 103).

According to a further non-limiting aspect, the computer program product causes said second electronic unit perform a step of calculating and/or measuring at least a signal strength for the received radio signal obtaining an auxiliary signal strength data, and electronically and automatically compares the auxiliary signal strength data with a predefined threshold (500) of radio signal strength in order to detect whether the compartment (102; 103) is opened or closed.

According to a further non-limiting aspect, the computer program product, in particular in said step of the transmitted signal strength data with a further measurement of signal strength, causes an electronic comparison of the signal strength data transmitted by the first electronic unit (10) with said threshold (500) and causes the comparison of the auxiliary signal strength data with said threshold (500), the activation of said alarm signal (A) taking place when both the comparisons are at least temporarily below, or above, said threshold (500).

According to a further non-limiting aspect, the computer program product causes performing a preliminary measurement (1001) of radio noise (600) strength, preferably made by said first electronic unit or made by a receiver module of said first electronic unit, said method further comprising a step of setting said threshold (500) in accordance with the measurement of said radio noise (600) strength.

According to a further non-limiting aspect, the computer program product causes executing a step of electronically calculating a threshold (500) in accordance with the measurement of said radio noise (600) strength, wherein said threshold (500) is calculated or set (1002) to be at least equal to a reference value for the measured radio noise (600) strength, and a step of storing the threshold (500) in a non-transitory memory.

According to a further non-limiting aspect, said computer program product causes performing the preliminary measurement of radio noise (600) strength over a measurement window of a predetermined length, less than 1 minute long, or less than 45 seconds long, or less than 30 seconds long.

According to a further non-limiting aspect, the preliminary measurement (1001) of radio noise (600) strength is preceded by a step of closure of said compartment and/or of closure of the door of said compartment, to configure the compartment (102; 103) in a closed configuration wherein it defines a limited volume or there is no substantial communication with the inner volume of said compartment (102; 103) and the external environment.

According to a further non-limiting aspect, the computer program product causes performing:
- a step of defining a predefined number of samples within said measurement window, said samples being spaced one another by a predefined amount of time;
- preforming said measurement of radio noise (600) strength by sampling a received radio noise (600) in correspondence of said samples, obtaining a plurality of noise (600) samples,
- a step of averaging or filtered averaging of said plurality of noise samples to obtain a data, in particular an average noise data, to obtain a final noise data with respect to which set said threshold (500).

According to a further non-limiting aspect, at least said first electronic unit (10) comprises a first armed operative configuration wherein the receiver module (12) is activated for receiving said radio signal (200), and a second non-armed configuration wherein at least the receiver module (12) is deactivated; said step of measurement of said radio noise (600) strength taking place after the switching to said first armed operative configuration.

According to a further non-limiting aspect, the method comprises a step of resetting said threshold (500) after each switching to said second non-armed configuration.

According to a further non-limiting aspect, the computer program product is configured to cause automatic setting said signal strength threshold (500) at a predetermined level above said reference value for the radio noise (600) strength, and/or said final noise data, optionally at least 1.5 dBm, or at least 1.8dBm or at least 2dBm, or at least 2.5dBm or at least 3dBm, or at least 5dBm, higher than said reference value for the measured radio noise (600) strength, or optionally at least 1.4 times, or at least 1.5 times, or at least 1.6 times, or at least 2 times, or at least 3 times, or at least 3.2 times higher than the value of said reference value for the measured radio noise (600) strength.

According to a further non-limiting aspect, the computer program product is configured to cause automatic setting said signal strength threshold (500) at least 1.1 times, or 1.58 times, or 2 times, or 3.16 times higher than the value of said reference value for the measured radio noise (600) strength.

Again, depending on whether the alarm activation is triggered by the signal measurement being more than or less than the threshold (e.g. positive or negative logic), the threshold can be set to be more than or less than the reference noise value, respectively.

According to a further non-limiting aspect, the computer program product causes activating a transmitter module (14; 24) to transmit a radio signal towards a remote receiver, and to include in said transmitted radio signal electronic data comprising radio signal strength previously measured for said received radio signal.

According to a further non-limiting aspect, the computer program product causes said data processing unit performs a step of electronically extracting from the received radio signal a radio strength measurement data, and subsequent step of comparing said extracted radio strength measurement data with said threshold (500) and activating the alarm signal (A) if said radio strength is below, or above, said threshold (500).

According to a further non-limiting aspect, activating said alarm signal (A) comprises at least activating an acoustic alarming device (30) for a predetermined amount of time, or causes the activation, in particular the immediate automatic activation of said acoustic alarming device (30).

According to a further non-limiting aspect, the computer program product causes the interaction of at least one ultrasonic or hyperfrequency sensor capable and/or specifically configured to at least detect an intrusion within said compartment (102; 103) with said first electronic unit (10), so that the triggering of said alarm signal (A) taking place when:
- at least temporarily said radio signal strength goes below, or above, said threshold (500), activating an alarm signal, said activation being made by said first electronic unit (10) and/or
- at least temporarily said ultrasonic or hyperfrequency sensor detects said intrusion.

According to a further non-limiting aspect, the computer program product causes the establishment of a linking or connection with said at least one ultrasonic or hyperfrequency sensor.

According to a further non-limiting aspect, said linking is a vehicle bus linking or is performed through electronically or operatively access to said vehicle bus.

### BRIEF DESCRIPTION OF THE DRAWINGS

Example arrangements will now be described in one or more preferred and non-limiting embodiments with reference to the enclosed figures, in which:
- figure 1 illustrates a lateral view of a vehicle provided with compartments wherein there are a device and a system according to the present disclosure;
- figure 2 illustrates a first non-limiting embodiment for a device according to the present disclosure;
- figure 3 illustrates a second non-limiting embodiment for the device according to the present disclosure;
- figure 4 illustrates a system according to the present disclosure;
- figure 5 illustrates a flow chart of operation for a non-limiting embodiment of a system according to the present disclosure;
- figure 6 illustrates an example of diagram of signal reception.

### DETAILED DESCRIPTION

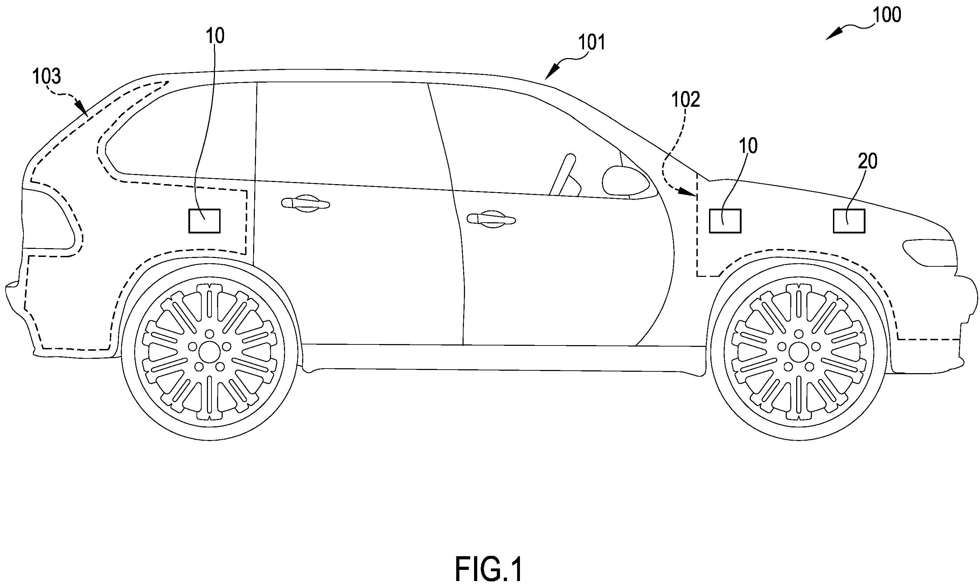

Figure 1 shows a non-limiting embodiment of a SUV vehicle 100 provided with a body 101 which defines a plurality of compartments; in figure 1, in detail, are shown a first compartment 102, corresponding substantially to the engine bay, and a second compartment 103 corresponding to the trunk bay; the vehicle 100 anyway comprises at least a third compartment substantially corresponding to the cabin.

All those compartments are openable compartments, meaning that they can have at least a first opened configuration and a second closed configuration: in the closed configuration the compartments are provided with a definite limited volume and are not in substantial communication with the external environment; in the open configuration, the compartments are in direct communication with the external environment.

It has been found that through the processing of a radio signal received by a receiver arranged in the compartment, it is possible to reliably detect if the door is open or closed, or equivalently, if the compartment is in the open configuration or in the closed configuration.

In particular, it has been found that measurements of received radio signal strength can be used as an indicator of whether the compartment is in the open configuration or in the closed configuration. With this technique, it is possible to detect open or closed configurations for compartments of a wide variety of shapes or sizes or volumes. For example, using the measurement techniques of the present disclosure, in some cases even a change from a fully closed configuration to an open configuration wherein the door is simply unlocked and ajar (e.g. only slightly open) can be actually reliably detected.

The processing of a radio signal as described above can be made through a vehicle compartment monitoring device, as in the configuration of the second compartment 103 of figure 1. In this case the compartment monitoring device comprises at least a first electronic unit 10, configured to be installed in an openable compartment 103 of the vehicle 100 and comprising at least one receiver module configured to at least receive a radio signal from a remotely positioned second electronic unit, which in the present description will be referred with reference number 20, not depicted in figure 1, for example in the same compartment as the first electronic unit 10 . The device comprises a body wherein the first electronic unit 10 is conveniently contained, and which can be waterproof and/or dustproof and preferably tamper-resistant, e.g. being realized in highly resistant plastics, and/or being provided with a key lock or being standardized according to an appropriate IP class, e.g. IP6x and/or IPx5.

This second electronic unit may be in principle any radio transmitter suitable to transmit a radio signal which can be received by the first electronic unit, e.g. in the same frequency band.

The first electronic unit 10 is configured to: a) calculate at least a signal strength for the received radio signal and; b) to automatically comparing the measured signal strength with a predefined threshold 500 of radio signal strength, said signal strength being used as an indicator of at least an open or closed configuration for the openable compartment 103. Accordingly, the first electronic unit 10 can make a detection of whether the openable compartment 103 is closed or open. The first electronic unit is configured to trigger the activation of an alarm signal upon a reception of said radio signal having strength below, or above, said threshold 500. The alarm signal can be produced as an output of the first electronic unit.

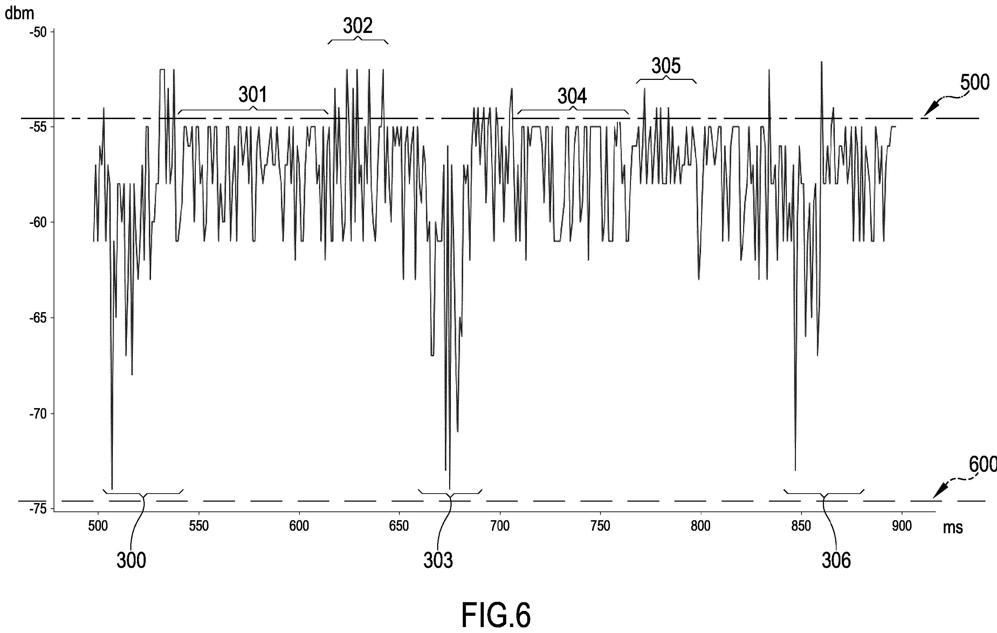

The previous sentence reports "below, or above" the threshold 500. The reason for these two alternative options is hereinafter explained. It has in fact observed that exact behaviour of the radio signal strength received by the receiver module when the compartment 103 in the closed configuration or in open configuration is not easily predictable for any type and/or shape of compartment. Although in many cases, changing from the closed configuration to the open configuration leads to a drop of the power for the received radio signal strength, this is not necessarily always the case. There may be other cases where changing from the closed configuration to the open configuration leads to an increase of the signal strength. Different factors can lead to this situation, including for example, the shape of the compartment, the material or materials used for -or found in- the compartment 103, the radio noise in the environment outside the compartment, the position of the door of the compartment, the position of the transmitter, the position of the receiver, etc. As a result, when the door is opened, it can sometimes lead to a local and/or temporary increase of the reflection of the radio signal towards the receiver module and/or its antenna which would result in an increased signal strength as the door is opened. In other words, this implies that the diagram according to figure 6, wherein the received radio signal strength reduces when the compartment 102, 103 is opened, shall not be considered as the sole situation that may appear. Thus the first electronic unit 10 may operate in "positive" logic, i.e. triggering alarm when the signal raises or anyway at least temporarily is above the threshold, or, alternatively, in "negative" logic, i.e. triggering the alarm when the signal drops or anyway at least temporarily is below the threshold.

More in detail, the first electronic unit 10 comprises a data processing unit 11 configured to manage and control the automatic execution of at least part of the operations the first electronic unit 10 can perform, and a receiver module 12, connected (e.g. electrically connected) to the data processing unit 11, and specifically configured to perform all the operations strictly related to reception and at least partial demodulation of the radio signal. The first electronic unit 10 further comprises an antenna 13, connectable also outside its body, electrically connected to an input of the receiver module 12. From a different perspective, the antenna 13 can also be seen as part of the receiver module 12. The alarm signal may be conveniently provided as an electric alarm signal, through an output A that can be a dedicated output or part of a data bus, suitable to transmit also data of a different type.

The antenna 13 may be any type of antenna, but preferably may be an antenna built in with the body of the electronic unit. In a particular, non-limiting embodiment, the antenna 13 may be a patch antenna, particularly suitable to be stored within the body of an electronic unit thanks to its small size; the type of antenna has been proven to be particularly effective when operating with GHz band radio signals, is substantially two-dimensional, and is therefore particularly suitable for being installed in restricted or narrow places like vehicle compartment. The integration of the antenna 13 within the body of the electronic unit allows for easing the installation process, since the operator may substantially deal with a simple box without sensitive external cables or sensor to connect. Great flexibility of installation is therefore provided to the electronic unit.

The data processing unit 11 may be implemented using any suitable configuration, such as any combination of one or more of hardware and/or software configuration. In one example, a software program can be run on the data processing unit 11. Said software program is loaded by the data processing unit 11 from a memory placed within the device. In other examples, the data processing unit 11 may be a Field-Programmable Gate Array (FPGA) integrated circuit. Whether the logic is implemented using software, hardware or any other suitable means, the logic is configured to cause the execution of:
- a step of receiving a radio signal transmitted by a remote electronic unit, e.g. the second electronic unit 20 installed in an openable compartment of a vehicle 100, said receiving being performed by a receiver module 12 of the first electronic unit 10 configured to be installed in a compartment of a vehicle 100;
- a step of calculating or measuring a signal strength for the received radio signal 200 thereby obtaining signal strength data, and electronically and automatically comparing the signal strength data with a predefined threshold 500 of radio signal strength in order to detect whether the compartment 102, 103 is opened or closed, and
- activating an alarm signal in accordance with the calculation and/or measurement, and/or according to the automatic comparison of the signal strength data with the predefined threshold 500.

In particular, as above indicated, the activating the alarm signal is performed in case at least temporarily said radio signal strength goes below, or above, said threshold 500, said activation being made by said first electronic unit 10. As the skilled person will appreciate, a number of comparison criteria may be suitable for determining when to activate the alarm. For example, in some cases, the determination can be made as soon as the signal may be over or below the appropriate threshold. In other cases, there may be a time criterion used as well, for example expecting to see the signal strength being above or below the threshold for at least a reference period.

It is also noteworthy that one or more time and/or signal strength criterion may be combined, for example to detect a pattern or to detect different configurations. For example, if we consider a case where it has been identified that when the compartment is opened, the measured signal strength will first increase as the door is first opened (first phase) and will then decrease again (second phase), the monitoring device may be comparing the signal strength with first and second thresholds (which may be the same or different), in combination or independently of each other, to detect the opening of the compartment. The first threshold may for example be used to detect whether the door is first being opened (first phase) by detecting whether the signal strength is above the first threshold or not. There could also be another comparison with the second threshold to detect if the door is already opened (second phase) by detecting if the signal strength is below the second threshold. The device can be configured to detect the first and second phases independently and/or can be configured to detect the sequence of the first phase followed by the second phase and different first and second thresholds could be used when the sequence is detected compared to when the phases are detected independently.

Using the data processing unit 11, the first electronic unit 10 may be further configured to perform a comparison of signal strength measurements: in particular a first signal strength measurement is the measurement of the radio signal received through the receiver module 12, while the second measurement corresponds to measurement data (i.e. data containing measurements of signal power or strength) received through said radio signal, and/or included in the radio signal. The measurement data comprises data of measurement of radio signal strengths performed by one or more remote units, for example by the second electronic unit 20. This latter data is extracted by the receiver module 12, and a processing step is performed by the data processing unit 11, or directly by a processing performed by the data processing unit 11. Based on a comparison of both the measurements with one or more thresholds 500 (e.g. below and/or above, in accordance with a "positive" - and/or "negative" - logic configuration as aforementioned described), the alarm signal is activated, otherwise it remains de-activated or idle. Threshold 500 may be the same for both (or "all" if more than two sets of signal measurements are being used) measurements, or may be adapted for the comparison of the measurement for the data extracted by the receiver module 12. Likewise, a different positive or negative configuration may be used for the different measurements. Thanks to this aspect, the risk of false positive activation of alarms can also be reduced because the activation determination is based on at least two different sets of measurements. In particular, the measurements are made in at least two separate (e.g. subsequent) instants or periods of time. For example, the second unit carries out a first measurement process in a first time period. It can then send measurement data relating to this first measurement process to the first unit in a second (later) time period. The first unit can then (i) carry out a second measurement process based on the signal received from the second unit, thereby obtaining further measurement information and (ii) obtain the measurement data that is sent by the second unit. The measurement data and further measurement information relate to two different time periods, the first and second time periods, respectively. Therefore, the effect of transient or burst noise that may lead to a temporary increase of the signal strength is expected to be mitigated.

It is noteworthy that the measurements of signal strength are generally performed on the same frequency band wherein the received and/or transmitted radio signal lies, although it is conceivable that the measurements could be carried out in a measurement band which is different from the transmission/reception band, for example which lies within the frequency band for transmitting and/or receiving the signals. The radio signal the present description deals with is expected to be in most cases a radio signal transmitted within a predefined radio or frequency band. For example, the radio signal may be a Bluetooth radio signal, or a signal lying in the Ultra High Frequency "UHF" band of the radio spectrum, i.e. within 300 MHz-3 GHz; otherwise, other bands of the radio spectrum may be used, e.g. the Super High Frequency "SHF" band of the radio spectrum, i.e. within 3 GHz-30 GHz. In addition, the signal may be a complex signal, modulated over a plurality of channels. In some cases, for example when the signal is also for transmitting information, the radio signal may be ciphered in order to increase the security of operation for the system, avoiding or at least reducing the risks of software tampering; in particular this renders more complicate alteration to the measurements data transmitted between the electronic units and/or makes it easier to detecting tampering attempts. In such cases, the encoding or ciphering may conveniently comprise public and private key ciphering or symmetric key ciphering (e.g. stream ciphering).

For example, the system of the present disclosure may in some cases use a reproducible signal for the monitoring device to carry out the measurements. Such a signal may follow a predetermined pattern. This would help keep the complexity and thus cost and size of the devices and system relatively low. On the other hand, if an intruder is aware of the pattern, they could potentially replicate this to generate a signal that would compensate for the increase or decrease of signal strength as the compartment is opened. While such an attack would be challenging to carry out, it is still conceivable that some intruders would attempt to do this. Accordingly, by using data that is encrypted before transmission and that is decrypted upon receipt, the receiver can check the integrity of the signal and/or the source of the signal. In particular, an intruder would not be expected to have access to the necessary keys and/or to the data to be encrypted and transmitted such that the intruder would not be expected to be able to predict what signal will be transmitted and thus would not be expected to generate a corresponding signal to try to mask the fact that the compartment is being opened.

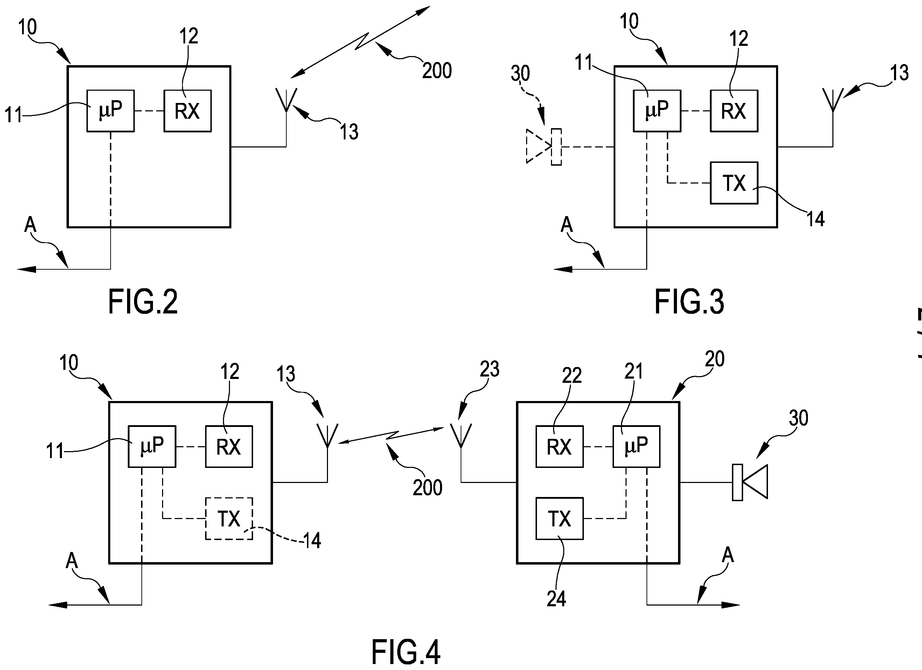

In an example embodiment, illustrated in figure 3, the device comprises an audible alarm device 30, operatively connected to the first electronic unit 10, configured to emit an audible alarm sound at least when such an alarm signal is activated. For the purposes of the present disclosure, as per "operatively connected" shall be meant any connection with the first electronic unit 10, for example an electric and/or electronic and/or optical and/or wireless connection, such a connection being suitable to allow exchange data at least between the involved elements, and is not limited to direct connections only. Element 30 is represented with dashed line to underline the optionality thereof. In the example of figure 3 the first electronic unit 10 is further provided with a transmitter module 14, electrically connected to the data processing unit 11. Such a transmitter module 14 is configured for transmitting a radio signal towards a remote receiver, preferably but in a non-limiting extent arranged in the same compartment, and the radio signal may include a radio strength data relating and/or corresponding to the measured strength of the radio signal received by the receiver module 12 through the antenna 13 (if provided). Thanks to this aspect, the reliability of the device is further increased, because one or more other electronic devices may receive data concerning the strength of the received signal and may perform a double check for authorizing the actual activation of the alarm signal.

The first electronic unit 10, in the embodiment of figure 3 further comprises an output A that can be a dedicated output or part of a data bus, suitable to transmit also data of a different type, on which the alarm signal may be transmitted.

It is also noteworthy that the audible alarm device 30 may be any type of horn or siren, and in particular may be piezoelectric or electromagnetic or pneumatic and may be configured to emit a signal which continuous and/or intermittent and/or modulated in amplitude and pitch. In a particular embodiment, the output A may be directly connected to the audible alarm device 30, so that the alarm signal may be directly used to activate the audible alarm device 30 in order to produce the audible signal. The siren may be included in the body of the device or be attached thereto in any suitable manner.

Figure 4 discloses a non-limiting embodiment of a vehicle compartment monitoring system, which may correspond to the system installed in any one of the compartments 102, 103 of the vehicle 100. The system may comprise a first electronic unit 10 and a second electronic unit 20, both configured to be installed in two different places of the compartment 102, in particular in a fixed manner, in order to be not easily removable and to allow provide reliable measurement of the signal strength in stable configuration, i.e. at least when the compartment 102 is in the closed configuration. As will be appreciated, the first electronic unit 10 and/or second electronic unit 20 may be partially or fully located outside the compartment and in the vicinity of the compartment, provided that the radio signal to be measured can travel to and/or from the units, as appropriate. In some cases, parts of the device are in the compartment (e.g. the antenna and/or receiver) and parts are outside the compartment. In other cases, the device is entirely outside the compartment. If the device is expected to receive a radio signal, the antenna and/or receiver can receive at least part of the radio signal to be measured once it has travelled in the compartment. If the device is expected to transmit a radio signal, the antenna and/or transmitter can transmit the radio signal into the compartment for it to be received by another device. For example, the system can be arranged such that the radio signal can travel through an opening to the antenna and/or receiver or from the antenna and/or transmitter of the relevant device. The skilled person will appreciate that the term "opening" should be construed broadly and from the perspective of the radio signal. It may for example correspond to a solid part of the vehicle which is at least partially transparent to the frequencies used for the radio signals to be measured.

In some case, the first electronic unit 10 may be an electronic unit according to the embodiment illustrated in figure 2 or according to the embodiment illustrated in figure 3.

The second electronic unit 20, configured to be installed in the compartment of the vehicle, comprises at least one transmitter module 24, configured to at least transmit a radio signal to the first electronic unit 10, and a data processing unit 21 connected (e.g. electrically connected) to the transmitter module 24. In some examples, the data processing unit 21 is configured to manage and control the automatic execution of at least part of the operations the second electronic unit 20 can perform, and the transmitter module 24 is specifically configured to perform all the operations strictly related to transmission and at least partial modulation of the radio signal.

In the embodiment depicted in figure 4, the second electronic unit 20 optionally comprises a receiver module 22, connected (e.g. electrically connected) to the data processing unit 21, and is further provided with an output A on which an alarm signal may be provided. The second electronic unit 20 further comprises also an antenna 23, which conveniently is connected to the transmitter module 24 and to the receiver module 22. An acoustic alarm device 30, possessing the features previously disclosed, is operatively and preferably electrically connected to the second electronic unit 20.

The antenna 23 may be any type of antenna, but preferably may be an antenna built in with the body of the electronic unit. In a particular, non-limiting embodiment, the antenna 23 may be a patch antenna.

In some cases, in the system comprising a first and a second electronic unit 10, 20, both those units are equipped with a transmitter and a receiver possessing the features as previously described. Thanks to this aspect, the system can be configured to perform a double check of the signal strength measured by each unit, and to activate the alarm signal only in case measurements performed by both the first and the second electronic unit 10 both show that the compartment is in the open configuration, and/or may be configured in such a way to let either or both the first electronic unit 10 or the second electronic unit 20 be capable to trigger the activation of the alarm signal. In some cases, the measurements may be combined and a different determination may be made depending on whether it is made from measurements from one of or both of the first and second electronic units. For example, if only one unit detects a likely intrusion, the criterion or criteria used to activate the alarm may be more stringent than if both units detect a likely intrusion. As an illustration, the system may be configured such that each unit may trigger the alarm if the measured signal strength is below 2dB under its respective reference value and such that at least one of the units may trigger the alarm if both measured signal strengths are below 1dB under their respective reference value. The first electronic unit 10, is configured to automatically execute a vehicle compartment monitoring method, comprising:
- a receiver module 12 of the first electronic unit 10 receiving a radio signal 200 from a remote electronic unit installed in an openable compartment 102 of a vehicle 100 or at least partially outside the compartment and in the vicinity of the openable compartment 102, wherein the first electronic unit 10 is configured to be installed within the compartment of a vehicle or at least partially outside the compartment and in the vicinity of the compartment;
- calculating or measuring at least a signal strength for the received radio signal 200, and to electronically and automatically compare the signal strength with a predefined threshold 500 of radio signal strength in order to detect whether the compartment 102 is in the open or closed configuration, and
- activating an alarm signal based on the automatic comparison of the signal strength data with the predefined threshold 500, in particular activating the alarm signal in case at least temporarily said radio signal strength goes below, or alternatively above, said threshold 500, activating an alarm signal.

As previously discussed, it is not always easily predictable under which conditions the alarm should be activated as a number of factors will affect the signal strength. One example method of determining such conditions can comprise having a skilled technician or a machine being instructed for checking whether, for a particular compartment 102, 103, changing from open to close configuration leads to an increase or, contrarily, a reduction of the power for the received signal. For example, the signal strength may be recorded against the open/configuration of the compartment. For example, the change in the signal strength may be measure for when the compartment is closed, wide open but also in one or more intermediate configuration - in particular when the compartment door is only slightly ajar as this corresponds to an important configuration to detect. In such a way, it is possible to determine whether the unit and/or the system may be operated in "positive" (i.e. above the threshold) logic or "negative" (i.e. below the threshold) logic when the compartment is being open. As previously mentioned, in different steps of the opening of the compartment, different positive or negative logics may be used (e.g. a positive logic when the compartment is first being opened and a negative logic when the compartment is wide open).

The first electronic unit 10, or the second electronic unit 20 when provided with receiver module, can perform a step of receiving a radio signal comprising signal strength measurements, and can perform one or more comparing steps based on the received signal strength measurements and on further signal strength measurements. For example, the further signal strength measurements can be performed by the first electronic unit (or second electronic unit, respectively) and can be performed on the received radio signal comprising signal strength measurements. In such a case, the activation of the alarm signal may take place when, in particular only when, the received signal strength measurements and the further signal strength measurements are both below, or in contrast above, said threshold 500. Additionally or alternatively, in some examples, the measurements may be compared to different thresholds and/or may be compared to each other.

The compartment monitoring method may further comprise a step of transmitting the measurement signal strength towards a further electronic unit, remotely installed with respect said first electronic unit 10; the method further comprises a step of comparing the transmitted measurement of signal strength with the further measurement of signal strength. In such a way, double-check of signal measurement can be performed by measuring the threshold 500 in two different places of the compartment. This helps reducing the risks of false, or in contrary missed, activations for the alarm, provided that the activation of the alarm signal takes place when, in particular only when, the measurement of the signal strength transmitted by the unit to the further electronic unit and the further measurement of signal strength are both below, or contrarily above, said threshold 500. Reliability is therefore enhanced, and this renders the method implementable for applications like avionics, wherein operation robustness is of a paramount importance.

In a particular embodiment, the operation of the system comprises:
a) transmitting a radio signal, from the first electronic unit 10;
b) receiving the signal with the receiver module 22 of the second electronic unit, wherein both the first and the second electronic unit 10, 20 are arranged in the same compartment of the vehicle 100 or at least partially outside the compartment and in the vicinity of the compartment;
c) measuring the strength of the received radio signal, and enclosing the measurement data in a new radio signal that the second electronic unit transmits back to the first electronic unit;
d) receiving the signal from the first electronic unit 10;
e) measuring the strength of the received signal by the first electronic unit; and
f) comparing the two measurements with one or more predefined thresholds 500, in a step of comparison after which:
   - if both measurements meet the predetermined activation criteria (in some examples, if both measurements are below or equal, or alternatively above or equal, the threshold(s) 500), the alarm signal is activated; and
   - otherwise, the alarm signal is de-activated, or remains inactive.

As the skilled person will appreciate, the teachings provided above in respect of each of the first and second electronic units may be applied equally to the second and first electronic units, respectively. Accordingly, the set of functionalities for the first and second electronic units in the discussion above may be swapped between the two electronic units. In another example, the first and second electronic units may each implement both sets of functionalities.

In such a case, one of the electronic units 10, 20, in particular the unit first sending the first radio signal may become a master unit while the other electronic unit may become a slave unit. Conveniently, the acoustic alarm device 30 is directly connected to and/or installed onto to the master unit, in particular to the data processing unit thereof.

It is also noteworthy that suitable setting of an appropriate threshold 500 of signal strength may depend on conditions of the environment surrounding the vehicle, therefore in some cases the threshold 500 can be adaptable and/or time-variant. For example, vehicles may sometimes be in places with strong or otherwise relevant background radio noise 600 (e.g. close to broadcasting plants, transformers, alternators,...). Setting an adaptable or time-variant threshold 500 can improve the performance of the system even in particularly severe environments and can allow a reduction in the risk of false positive detections of compartment in the open configuration or false negative detections of compartment in the closed configuration.

According to an example of the present disclosure, there are provided electronic units that can be either the first electronic unit or the second electronic unit 10, 20 (or both) and that in a particular embodiment are configured to perform a setting of the signal strength threshold 500, through the following steps, which in a preferred and non-limiting embodiment are automatically performed, for example by the data processing unit of the relevant unit:
i) measuring of background radio signal strength (radio noise 600 in the environment) in absence of transmission of a radio signal by the other electronic unit (if present) in the compartment, in particular with the compartment in closed configuration, in order to obtain a background radio signal strength data (radio noise 600 data);
ii) (optionally) repeating the measurement for a predetermined amount of time, or performing the measurement over a measurement window of a predetermined length, preferably less than 1 minute long, or less than 45 seconds long, or less than 30 seconds long. From the measurement data (which will comprise a plurality of measurement values) obtained in this manner, a reference noise value is derived.
iii) setting the threshold 500 in accordance with the measurement or to the above background radio signal strength data.

For example, the threshold can be set using a predetermined measurement delta or gap and using said measured radio noise 600 strength, optionally at least 1.5 dBm, or at least 1.8dBm, or at least 2dBm, or at least 2.5dBm, or at least 3dBm, or at least 5dBm, distant with respect to said measured radio noise 600 strength.

For deriving the reference noise value, a variety of techniques may be used. For example, it can be derived using one or more of an average value, a median value, a maximum value, a peak value, a peak-to-peak value and a root mean square value for all or some of the noise measurement values obtained from the measurement of radio noise strength, for example from a plurality of samples if samples are provided. For each value that is calculated to derive the reference noise value, all of the measurement data or only some of the measurement data may be used. For example, some extreme values may be removed in order to reduce the effect of very short noise peaks and/or of possible artefacts in the noise measurements.

The skilled person will also appreciate that how the reference noise value is derived will also depend on how the signal strength is measured. For example, the techniques that are used to measure the signal strength to be compared with the threshold may influence which techniques are used to derive the reference noise value. If for example the signal strength is measured as a rolling average, the threshold may be set based on an average value of the noise measurement values over a measurement period.

In one example, the data processing unit of the first electronic unit 10 or the second electronic unit 20 may be configured for determining a measurement window provided with a predefined plurality of samples, for example 1000 samples, separated by a predetermined amount of time (e.g. 30 µs) between one another (the times when the samples are collected are herewith defined as sampling times), and to store sampled noise 600 strength data received through the receiver module in correspondence of the sampling times. The data processing unit may be then configured to automatically run a calculation (e.g. a software and/or hardware subroutine), for example a calculation for averaging or filtered and/or weighted averaging, for calculating an average of said sampled noise 600 strength data to produce in output a noise 600 strength data, which is the final data on which threshold 500 is calculated.

Thanks to the point iii), in particular, an appropriate guard is introduced between the radio noise 600 and the threshold 500 set, and this helps obtaining better performances even in case of sudden small increases of noise. Averaging avoids or otherwise mitigates the effects that temporary peaks in noise may have on the calculation of the threshold.

Preferably, the above point i) may take place only when the data processing unit detects that the compartment 102, 103 is in the closed configuration. When measuring radio noise, conveniently, the receiver module may be in a specific preliminary measurement operative mode, differing from the normal operative configuration, or detection mode, wherein it receives the radio signal 200 for detecting the configuration or change of configuration of the compartment.

It is noteworthy that the measurement of background noise 600 can be performed on the same frequency band as the radio signal. The data so calculated is stored in a memory of the first electronic unit 10 or the second electronic unit 20 or otherwise electronically accessible from at least one of those units.

The first and the second electronic unit 10, 20 may be configured in an armed configuration, wherein the main modules thereof, and in particular the receiver module and/or the transmitter module, are activated for transmitting and/or receiving the radio signal, and an unarmed configuration, wherein the main modules, and in particular the receiver module and/or the transmitter module, are inactive; those two configurations (and any other available configuration mode) may be selected as appropriate. For example, these mode (and/or other modes) may be selected using either a local command (e.g. received through a switch) or a remote command, e.g. an electric activation command transmitted by the data bus of the vehicle, and/or the ignition key of the vehicle, or the activation of the automated locking system for the doors of the vehicle, etc. in an embodiment, the device may be configured so that the first or the second electronic unit 10, 20 perform the aforementioned threshold setting each time they switch to an armed configuration or, more in general, the reset of the threshold may be performed after each switching to the second non-armed configuration, for example by storing the threshold value data in a memory which is erased or overwritten after each switching to the second non-armed configuration or each time the device switches to the first armed configuration. Thanks to this aspect, the device and the system according to the present disclosure automatically adapt to the local radio noise 600 conditions, and false positives are further reduced.

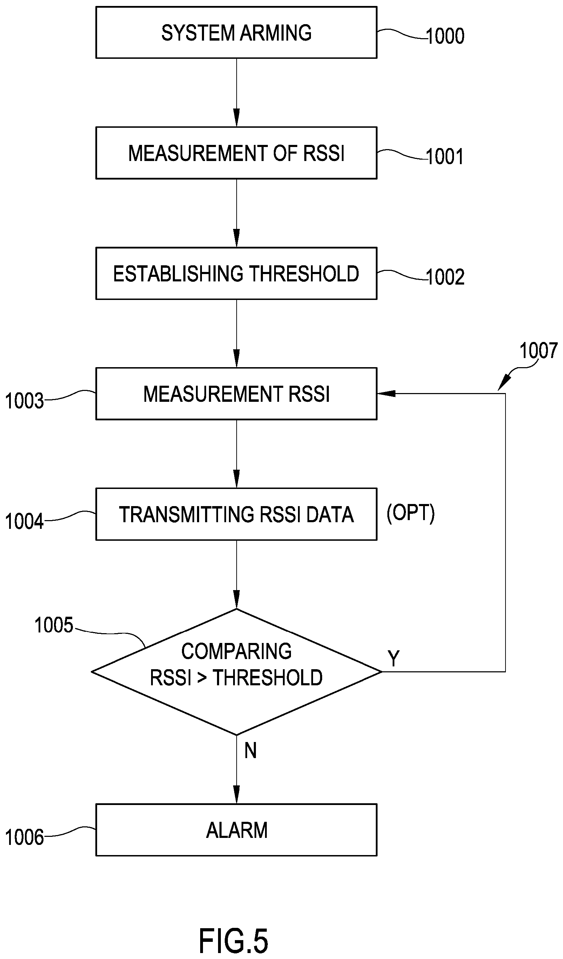

The diagram of figure 5 helps in clarifying the aspects concerning the activation of the system according to the present disclosure, in particular in cases wherein opening the compartment causes a reduction of the signal strength. In the interest of conciseness, Figure 5 will be discussed looking at the example where the first electronic unit will set a threshold based on a signal received from the second unit but the skilled person will appreciate that the same teachings can be equally applied to a system where the first and second electronic units have been swapped (e.g. where the second unit receives a signal from the first unit and sets a threshold accordingly).

When the system is armed (block 1000), first of all the data processing unit of the first electronic unit 10 performs the step of setting of the threshold 500 by measuring the strength of the radio signals in the environment (block 1001) and by establishing (block 1002) the threshold 500 in accordance with the measurement as above described. Then, (block 1003) the system (for example the first electronic unit) starts measuring the radio signal strength of the radio signal 200 transmitted by the second electronic unit, and retransmits the measured strength (block 1004) as electronic measurement data to the second electronic unit of the system. The second electronic unit compares the measurement with the threshold 500 set at block 1002 and which has been made available to the second electronic unit and which may for example be stored in advance in a memory of the second electronic unit. If the measurement is above the threshold 500 (or in the case of operation with reversed logic, if the measurement is below the threshold, this latter case not being represented in the annexed figures) then the cycle is repeated (arrow 1007), with a new measurement of the radio signal strength for the radio signal transmitted by one of the electronic units 10, 20; otherwise (exit N, block 1005), the alarm signal is activated (block 1006).The reader may note that figure 5 cites "measurement of RSSI" in some blocks. As the skilled person will know, RSSI stands for Received Signal Strength Indicator and is a measure of a strength at which a signal is received at a receiver. How the RSSI value can be derived is sometimes defined in standards, such as in Bluetooth or in many mobile telecommunications standards. In other cases, the use of RSSI is provided for but the RSSI calculation method is left open (for example in 802.11) for the hardware manufacturer to implement as they deem appropriate. Regardless, the skilled person will appreciate that any suitable measure of signal strength may be used and that the present disclosure is not limited to existing RSSI or RSSI-like implementations. While for some existing standards using such or similar signals, a RSSI is already defined and provides one of the qualitative indexes of radio strength among the most widely used, alternatively or additionally, any other kind of index of strength for radio signal may be used that enables the receiver to measure the strength of the received signal in a consistent way, with a view to being able to having a reliable measure of the received signal - whether the measurements are for setting a threshold or determining of the received signal meets one or more activation criteria. It is also noteworthy that the measurements can be made in any appropriate unit, e.g. dBm, dBuV/m, etc. (including measurements without units) so long as the measurement method is consistent.

It also noteworthy that, in an example where the radio signal(s) may be according to one of the Bluetooth ^{®} protocols, in particular according to the Low Energy Bluetooth protocol. Using this protocol can help reduce the complexity of design of the high-level engineering of signal transmission by reusing readily available hardware or software. In this example, the frames transmitted can have signal strength, in particular RSSI, data embedded. In fact, Bluetooth ^{®} PDUs contain a multiple byte field (Beacon Advertisement) which, in a specific part (Ref. RSSI) are specifically configured to store RSSI data concerning the communication.

If using a Bluetooth protocol that provides for the transmission of RSSI data in PDUs, the receiver module, when decoding the PDUs coming from the transmitter module of the other electronic unit, alone or through the computation capability of the associated data processing unit, decodes the PDUs, in particular at least one part of a first PDU, and specifically and electronically reads the RSSI field in order to extract data concerning the strength of the radio signal measured or otherwise calculated by the other electronic unit.

Figure 6 shows a diagram for radio signal strength measured in dBm in a compartment of a vehicle provided with a door in three different conditions: door completely closed, door partially opened, door completely opened. The measurements corresponding to the door completely closed are referred with reference numerals 302, 305. Measurements performed with the door partially opened are referred with reference numerals 301, 304. Measurements with door completely opened are referred with reference numerals 300, 303, 306. Figure 6 also shows an illustrative level for radio noise 600, just above -75dBm, and a threshold line 500 arranged at about -55dBm.

It is noteworthy that, specifically and in a non-limiting extent for road vehicle compartments like cars, SUVs, trucks, commercial vehicles, caravans, camping cars and other vehicles, the door of the compartment may have an intermediate open condition wherein it is not in contact with the frame or the sealing band of the compartment, and is slightly detached therefrom, resulting in leaving a small opening. The door compartment may be "closed" when full locking is present, e.g. when the door is in contact with the frame or the sealing band of the compartment, so that the inner volume is substantially confined. This situation is quite common in car doors, wherein the door - if lightly pushed against the frame or the body of the vehicle - is actually in a situation wherein the locking system of the door is engaged with the respective counterpart of the frame but do not fully isolate the compartment. This is the case of the door partially opened as referred by numerals 301, 304. Full locking of the door, is hence marked with the reference numerals 302, 305.

It can be clearly seen that at least 2.5dBm in average typically appear as a difference between the door partially opened and the door completely closed condition, with a loss of received power in case the door is partially opened. If the door is completely opened the measurement difference becomes more substantial, with a difference of almost 20dBm with respect to the condition where the door is closed. It can be inferred that yet only slightly opening a door in a previously completely closed compartment can lead to an appreciable reduction of at least 1.8 times the power received by a receiver, that more in general can be about 1.5-3 times (i.e. about 1.8 to 4.8dBm) the power received by a receiver, e.g. with a reduction of least 1.5 dBm, or at least 1.8dBm, or at least 2dBm, or at least 2.5dBm, or at least 3dBm, or at least 4.8dBm, or at least 5dBm, or, equivalently in linear units at least 1.4 times, or 1.5 times, or at least 1.6 times, or at least 1.8 times, or at least 2 times, or at least 3 times, or at least 3.2 times higher than (or less than, depending on whether a positive or negative logic is used) the value of said measured radio noise strength 600.

Through the device according to the present disclosure, a reliable indicator of switching between the opened and closed configuration for a compartment can be obtained. The electronic unit or system according to the present disclosure is therefore capable or suitable to detect also intermediate configurations of aperture for a vehicle compartment, overcoming the limits provided by traditional mechanical or magnetic switches. More in detail, mechanical or magnetic switches may only be capable of detecting whether the compartment door is in the open or closed configuration, and are not configured to detect any intermediate degree of opening, e.g. the extent to which the door is (partially) opened. On the other hand, through the electronic unit or system according to the present disclosure, by measuring the variation in the received signal strength, it can be possible to detect also variations of the degree of aperture of the compartment door, because variations in the degree of aperture produce variations in the coefficient of reflexion of radio waves in the compartment which the electronic units may be configured to correlate together.

In some examples, the device according to the present disclosure and/or the system according to the present disclosure may comprise ultrasonic or hyperfrequency (e.g. an HF motion detector) sensors suitable to at least detect the intrusion within the compartment 102, 103. The ultrasonic or hyperfrequency sensors may be part of the first electronic unit 10 and/or of the second electronic unit 20, either by being included in their body or being otherwise operatively connected thereto so as to allow operative interaction (e.g. electric, wireless or optical connection). The ultrasonic or hyperfrequency sensors operation may be managed or superintended by the data processing units 11, 21 of the first electronic unit 10 and/or second electronic unit 20, which may have an operative configuration, for the purposes of the present disclosure mentioned as "operative cooperation configuration", wherein those sensor operate simultaneously with the receiver modules 12, 22 and/or the transmitter modules 14, 24 in order to realize a combined radio/ultrasonic compartment monitoring device or system. Thanks to this aspect, reliability of detection of intrusion or at least of presence of an open or closed configuration for the compartment 102, 103 may be increased, which is expected in particular to increase the immunity to false alarms. In particular, ultrasonic sensors may be a plurality, and may be installed, each one, in a fixed location within the compartment 102, 103 of the vehicle, preferably in such a way to have a localization range or sector directed substantially to the opposite direction of the compartment.

It is noteworthy that ultrasonic or hyperfrequency sensors may already be part of a vehicle equipment. In this latter case, the first electronic unit 10 or the second electronic unit 20, or both, may comprise a linking operative configuration wherein they establish a logic connection with such ultrasonic or hyperfrequency sensors in order to let them transmit intrusion signal or data to the unit. Conveniently this linking operative configuration is managed by the data processing unit 11, 21. In particular, ultrasonic or hyperfrequency sensors may be configured to transmit an intrusion signal or data wirelessly, e.g. with any standard wireless protocol as Wi-Fi, or through the vehicle bus, e.g. by transmitting data complying to serial CAN-bus standard or EIA RS 485. Thanks to this aspect, the device and system according to the present disclosure advantageously may be integrated with a standard vehicle antitheft system to increase the protection of the vehicle, thus allowing to obtain further better performances and to provide an easier integration with an existing vehicle system.

In those latter embodiments, the triggering of the alarm signal may be provided either when both the radio signal goes below, or alternatively above, the threshold 500 and when ultrasonic or hyperfrequency sensors detect the intrusion in the compartment 102, 103, or when at least one of the aforementioned conditions take place.

The connection with the ultrasonic or hyperfrequency sensors may be performed through a dedicated interface, present on the first electronic unit 10 and/or on the second electronic unit 20. Such an interface may be a wireless interface or, should the sensor communicate on the vehicle bus, may be a vehicle bus interface, preferably a CAN-bus interface and/or an interface complying with EIA RS-485 standard, said interface being configured to allow at least the reception of intrusion data transmitted by said at least one ultrasonic or hyperfrequency sensor.

As discussed above, in some cases, only the transmitter and receiver are located in the monitored compartment (or in the vicinity of / near the compartment, e.g. if the signal can still travel to and/or from the compartment). Other elements, for example any signal processing element, power source or memory, may be located outside of the compartment and connected to the transmitter or receiver as appropriate. For example, a monitoring device may be provided as at least two elements, a first element comprising at least a transmitter and/or receiver (as appropriate) and located in or in the vicinity of the compartment and a second element located outside the compartment, potentially remotely from the compartment. As the skilled person will appreciate, these teachings can be applied to the first and/or second monitoring devices.

According to the present disclosure, there has been provided techniques to detect the opening of a compartment which may be located within the compartment itself. This is in contrast to a bonnet switch or other mechanical or magnetic detecting means that, by nature, are required to be fixed to or near the frame for the opening. As previously mentioned, such a location risk reducing the structural integrity of the frame. In addition, in the event that the system has to be replaced, the risk of causing significant damage to the vehicle, e.g. its structure, is thereby reduced as well.

Additionally, it is expected that such devices can be provided with weather resistance features (e.g. to protect against water and humidity) such that they would be less prone to decay (e.g. rusting) compared to a mechanical or magnetic switches for example. Accordingly, the lifespan of a system according to the present disclosure is expected to be longer than that of mechanical or magnetic detecting means. This in turn will make the system more reliable (as it is less likely to fail, or at least not in the same timeframe) and also lengthen the time period before the vehicle needs to be repaired.

It is finally clear that modifications, adaptations or additions may be made to some or all of the device, the system, and the method according to the present disclosure without necessarily departing from the scope of protection provided by the annexed claims. The invention is defined by the claims.

## Claims

1. A vehicle compartment monitoring device, comprising:
- a first electronic unit (10), configured to be installed in an openable compartment (102; 103) of a vehicle (100) and comprising a receiver module (12) configured to receive a radio signal (200) from a remotely positioned second electronic unit (20);
- said first electronic unit (10) being configured to detect, in a detection mode, whether the openable compartment (102; 103) is in a closed or open configuration, and being configured to calculate or measure a signal strength for the received radio signal (200) and to calculate or measure a further signal strength for the received radio signal (200), and to electronically and to automatically compare the measured signal strength, the further measured signal strength and a predefined threshold (500) of radio signal strength, and to identify an increase or decrease in the signal strength based on the comparison, said signal strength being used as an indicator of at least said open or closed configuration for said openable compartment (102; 103);
- said first electronic unit (10) being further configured to trigger an activation of an alarm signal (A) based on the identified increase or decrease in the signal strength ; and
- said first electronic unit (10) being configured to record a measurement of signal strength for said openable compartment (102; 103) in the closed configuration and the open configuration and to determine whether to trigger activation of the alarm signal (A) in response to an increase or decrease in the signal strength.

2. A vehicle compartment monitoring device according to claim 1, wherein said first electronic unit (10) is further configured to perform a measurement, in a preliminary measurement mode, of radio noise (600) strength and to set or cause the setting of said threshold (500) based on the measurement of radio noise (600) strength.

3. A vehicle compartment monitoring device according to claim 2, wherein the first electronic unit (10) is configured to derive a reference noise value from the measurement of radio noise strength and to set the threshold (500) to be based on the reference noise value.

4. A vehicle compartment monitoring device according to claim 3, wherein the reference noise value is derived using one or more of: an average value, a median value, a maximum value, a peak value, a peak-to-peak value and a root mean square value for all or some of the noise measurement values obtained from the measurement of radio noise strength.

5. A vehicle compartment monitoring device according to any one of the preceding claims, wherein the measurement of radio noise (600) strength is performed over a measurement window of a predetermined length, less than 1 minute long, or less than 45 seconds long, or less than 30 seconds long.

6. A vehicle compartment monitoring device according to any one of the preceding claims, comprising a first armed operative configuration wherein, in the first armed operative configuration, the receiver module (12) is activated for receiving said radio signal (200), and a second non-armed configuration wherein, in the second non-armed configuration, the receiver module (12) is deactivated; said first electronic unit (10) being configured to perform the measurement of said radio noise (600) strength after the switching to said first armed operative configuration and when in said preliminary measurement mode said device, or said first electronic unit (10) is configured to reset said threshold (500) after each switching to said second non-armed configuration.

7. A vehicle compartment monitoring device according to any one of the preceding claims, comprising an audible alarm device (30), operatively connected to said first electronic unit (10) for receiving, when transmitted, said alarm signal (A); said audible alarm device (30) being configured to produce an audible sound when receiving said alarm signal (A).

8. A vehicle compartment monitoring device according to any one of the preceding claims, wherein said first electronic unit (10) further comprises a transmitter module (14), configured to transmit a radio signal (200) towards a remote receiver and to include at least once in said transmitted radio signal (200) electronic data comprising radio signal strength indicator.

9. A vehicle compartment monitoring device according to any one of the preceding claims, wherein the first electronic unit (10) is configured to receive a radio signal (200) in turn comprising electronic data comprising radio signal (200) strength measurements, and is configured to extract said radio signal (200) strength measurement from said radio signal (200) and to subsequently produce in output an alarm signal (A) upon a reception of said radio signal (200) having strength below, or above, said threshold (500).

10. A vehicle compartment monitoring system, comprising:
- a first electronic unit (10), according to one or more of the preceding claims;
- a second electronic unit (20), configured to be installed in the compartment (102; 103) of the vehicle (100) and comprising a transmitter module (24) configured to transmit the radio signal (200) to the first electronic unit (10).

11. A vehicle compartment monitoring method, comprising:
- receiving a radio signal (200) transmitted by a remote electronic unit installed in an openable compartment (102; 103) of a vehicle (100), said receiving being performed by a receiver module (12) of a first electronic unit (10) configured to be installed in a compartment of a vehicle (100);
- calculating or measuring a signal strength for the received radio signal (200), calculating or measuring a further signal strength for the received radio signal (200), and electronically and automatically comparing the measured signal strength, the further measured signal strength and a predefined threshold (500) of radio signal strength, and identifying an increase or decrease in the signal strength based on the comparison, said signal strength being used as an indicator of whether the compartment (102; 103) is in an opened or closed configuration,
- triggering an activation of an alarm signal (A) based on the identified increase or decrease in the signal strength, and
- recording a measurement of signal strength for said openable compartment (102; 103) in the closed configuration and the open configuration and to determine whether to trigger activation of the alarm signal (A) in response to an increase or decrease in the signal strength.

12. The method according to claim 11, further comprising triggering the activation of the alarm signal in case said radio signal strength goes below, or above, said threshold (500), said triggering being made by said first electronic unit (10).

13. The method according to claim 11 or 12, comprising receiving the signal strength from a further electronic unit (20), remotely installed with respect said first electronic unit (10);
the method further comprises triggering activation of the alarm signal (A) when both said signal strength data and said further measured signal strength are below, or above, said threshold (500).

14. The method according to one of claims 11 to 13 wherein said radio signal (200) is transmitted in a frequency band; wherein said strength for the received radio signal (200) is measured in said frequency band.

## Patentansprüche

1. Fahrzeugraumüberwachungsvorrichtung, umfassend:
- eine erste Elektronikeinheit (10), so konfiguriert, dass sie in einem öffenbaren Raum (102; 103) eines Fahrzeugs (100) installiert wird, und umfassend ein Empfängermodul (12), so konfiguriert, dass ein Funksignal (200) von einer entfernt positionierten zweiten Elektronikeinheit (20) empfangen wird;
- wobei die genannte erste Elektronikeinheit (10) so konfiguriert ist, dass in einem Erkennungsmodus erkannt wird, ob sich der öffenbare Raum (102; 103) in einer geschlossenen oder geöffneten Konfiguration befindet, und so konfiguriert ist, dass eine Signalstärke für das empfangene Funksignal (200) berechnet oder gemessen wird und eine weitere Signalstärke für das empfangene Funksignal (200) berechnet oder gemessen wird und die gemessene Signalstärke, die weitere gemessene Signalstärke und ein vordefinierter Schwellenwert (500) einer Funksignalstärke elektronisch und automatisch verglichen werden und auf Basis des Vergleichs ein Anstieg oder eine Abnahme der Signalstärke identifiziert wird, wobei die genannte Signalstärke als Indikator für zumindest die genannte geöffnete oder geschlossene Konfiguration für diesen öffenbaren Raum (102; 103) verwendet wird;
- wobei die genannte erste Elektronikeinheit (10) ferner so konfiguriert ist, dass eine Aktivierung eines Alarmsignals (A) auf Basis des identifizierten Anstiegs oder der identifizierten Abnahme der Signalstärke ausgelöst wird; und
- wobei die genannte erste Elektronikeinheit (10) so konfiguriert ist, dass eine Messung einer Signalstärke für den genannten öffenbaren Raum (102; 103) in der geschlossenen Konfiguration und der geöffneten Konfiguration aufgezeichnet wird und dass bestimmt wird, ob die Aktivierung des Alarmsignals (A) infolge eines Anstiegs oder einer Abnahme der Signalstärke ausgelöst wird.

2. Fahrzeugraumüberwachungsvorrichtung nach Anspruch 1, wobei die genannte erste Elektronikeinheit (10) ferner konfiguriert ist, um in einem vorläufigen Messmodus eine Messung der Stärke von Funkstörungen (600) durchzuführen und den genannten Schwellenwert (500) auf Basis der Messung der Stärke von Funkstörungen (600) festzulegen oder die Festlegung zu veranlassen.

3. Fahrzeugraumüberwachungsvorrichtung nach Anspruch 2, wobei die erste Elektronikeinheit (10) konfiguriert ist, um einen Referenzrauschwert aus der Messung der Stärke von Funkstörungen abzuleiten und den Schwellenwert (500) so festzulegen, dass er auf dem Referenzrauschwert basiert.

4. Fahrzeugraumüberwachungsvorrichtung nach Anspruch 3, wobei der Referenzrauschwert abgeleitet wird anhand eines oder mehrerer von: einem Durchschnittswert, einem Mittelwert, einem Höchstwert, einem Spitzenwert, einem Spitze-zu-Spitze-Wert und einem Effektivwert für alle oder einige der Rauschmesswerte, die aus der Messung der Stärke von Funkstörungen ermittelt wurden.

5. Fahrzeugraumüberwachungsvorrichtung nach einem der vorstehenden Ansprüche, wobei die Messung der Stärke von Funkstörungen (600) innerhalb eines Messfensters mit einer vorbestimmten Länge durchgeführt wird, kürzer als 1 Minute oder kürzer als 45 Sekunden oder kürzer als 30 Sekunden.

6. Fahrzeugraumüberwachungsvorrichtung nach einem der vorstehenden Ansprüche, umfassend eine erste aktivierte funktionelle Konfiguration, wobei, in der ersten aktivierten funktionellen Konfiguration, das Empfängermodul (12) aktiviert ist zum Empfangen des genannten Funksignals (200), und einer zweiten nicht aktivierten Konfiguration, wobei, in der zweiten nicht aktivierten Konfiguration, das Empfängermodul (12) deaktiviert ist; wobei die genannte erste Elektronikeinheit (10) so konfiguriert ist, dass die Messung der genannten Stärke von Funkstörungen (600) nach dem Wechsel in die genannte erste aktivierte funktionelle Konfiguration durchgeführt wird, und wobei, im genannten vorläufigen Messmodus, die genannte Vorrichtung oder die genannte erste Elektronikeinheit (10) so konfiguriert ist, dass der genannte Schwellenwert (500) nach dem Wechsel in die genannte zweite nicht aktualisierte Konfiguration zurückgesetzt wird.

7. Fahrzeugraumüberwachungsvorrichtung nach einem der vorstehenden Ansprüche, umfassend eine akustische Alarmvorrichtung (30), die funktionell mit der genannten ersten Elektronikeinheit (10) verbunden ist, um das genannte Alarmsignal (A) zu empfangen, wenn es übertragen wird; wobei die genannte akustische Alarmvorrichtung (30) so konfiguriert ist, dass ein hörbarer Ton erzeugt wird, wenn das genannte Alarmsignal (A) empfangen wird.

8. Fahrzeugraumüberwachungsvorrichtung nach einem der vorstehenden Ansprüche, wobei die genannte erste Elektronikeinheit (10) ferner ein Sendermodul (14) umfasst, so konfiguriert, dass ein Funksignal (200) an einen entfernten Empfänger übertragen wird und dass in dem genannten übertragenen Funksignal (200) zumindest einmal elektronische Daten umfassend den Indikator für die Funksignalstärke beinhaltet sind.

9. Fahrzeugraumüberwachungsvorrichtung nach einem der vorstehenden Ansprüche, wobei die erste Elektronikeinheit (10) so konfiguriert ist, dass ein Funksignal (200) wiederum umfassend elektronische Daten umfassend Messungen der Funksignalstärke (200) empfangen wird, und so konfiguriert ist, dass die genannte Messung der Funksignalstärke (200) aus dem genannten Funksignal (200) extrahiert wird und anschließend als Ausgabe ein Alarmsignal (A) erzeugt wird, wenn das genannte Funksignal (200) mit einer Stärke unter oder über dem genannten Schwellenwert (500) empfangen wird.

10. Fahrzeugraumüberwachungssystem, umfassend:
- eine erste Elektronikeinheit (10) nach einem oder mehreren der vorstehenden Ansprüche;
- eine zweite Elektronikeinheit (20), so konfiguriert, dass sie in dem Raum (102; 103) des Fahrzeugs (100) installiert wird, und umfassend ein Sendermodul (24), so konfiguriert, dass das Funksignal (200) an die erste Elektronikeinheit (10) übertragen wird.

11. Fahrzeugraumüberwachungsverfahren, umfassend:
- Empfangen eines Funksignals (200), das durch eine entfernte Elektronikeinheit übertragen wird, die in einem öffenbaren Raum (102; 103) eines Fahrzeugs (100) installiert ist, wobei das genannte Empfangen durch ein Empfängermodul (12) einer ersten Elektronikeinheit (10) durchgeführt wird, die so konfiguriert ist, dass sie in einem Raum eines Fahrzeugs (100) installiert wird;
- Berechnen oder Messen einer Signalstärke für das empfangene Funksignal (200), Berechnen oder Messen einer weiteren Signalstärke für das empfangene Funksignal (200) und elektronisches und automatisches Vergleichen der gemessenen Signalstärke, der weiteren gemessenen Signalstärke und eines vordefinierten Schwellenwerts (500) einer Funksignalstärke und Identifizieren eines Anstiegs oder einer Abnahme der Signalstärke auf Basis des Vergleichs, wobei die genannte Signalstärke als Indikator dafür verwendet wird, ob sich der Raum (102; 103) in einer geöffneten oder einer geschlossenen Konfiguration befindet,
- Auslösen einer Aktivierung eines Alarmsignals (A) auf Basis des identifizierten Anstiegs oder der identifizierten Abnahme der Signalstärke, und
- Aufzeichnen einer Messung einer Signalstärke für den genannten öffenbaren Raum (102; 103) in der geschlossenen Konfiguration und der geöffneten Konfiguration und Bestimmen, ob die Aktivierung des Alarmsignals (A) infolge eines Anstiegs oder einer Abnahme der Signalstärke ausgelöst wird.

12. Verfahren nach Anspruch 11, ferner umfassend das Auslösen der Aktivierung des Alarmsignals, wenn die genannte Funksignalstärke unter oder über dem genannten Schwellenwert (500) liegt, wobei das genannte Auslösen durch die genannte erste Elektronikeinheit (10) erfolgt.

13. Verfahren nach Anspruch 11 oder 12, umfassend das Empfangen der Signalstärke von einer weiteren Elektronikeinheit (20), die in Bezug auf die genannte erste Elektronikeinheit (10) entfernt installiert ist;
wobei das Verfahren ferner umfasst, dass die Aktivierung des Alarmsignals (A) ausgelöst wird, wenn sowohl die Daten zur genannten Signalstärke als auch die genannte weitere gemessene Signalstärke unter oder über dem genannten Schwellenwert (500) liegen.

14. Verfahren nach einem der Ansprüche 11 bis 13, wobei das genannte Funksignal (200) in einem Frequenzbereich übertragen wird; wobei die genannte Stärke für das empfangene Funksignal (200) in dem genannten Frequenzbereich gemessen wird.

## Revendications

1. Dispositif de surveillance de compartiment de véhicule, comprenant :
- une première unité électronique (10), configurée pour être installée dans un compartiment (102 ; 103) ouvrable d'un véhicule (100) et comprenant un module récepteur (12) configuré pour recevoir un signal radio (200) à partir d'une deuxième unité électronique (20) positionnée à distance ;
- ladite première unité électronique (10) étant configurée pour détecter, dans un mode de détection, si le compartiment (102 ; 103) ouvrable est dans une configuration fermée ou ouverte, et étant configurée pour calculer ou mesurer une intensité de signal pour le signal radio (200) reçu et pour calculer ou mesurer une autre intensité de signal pour le signal radio (200) reçu, et pour comparer électroniquement et automatiquement l'intensité de signal mesurée, l'autre intensité de signal mesurée et un seuil (500) prédéfini d'intensité de signal radio, et pour identifier une augmentation ou une diminution de l'intensité de signal sur la base de la comparaison, ladite intensité de signal étant utilisée en tant qu'indicateur d'au moins ladite configuration ouverte ou fermée pour ledit compartiment (102 ; 103) ouvrable ;
- ladite première unité électronique (10) étant en outre configurée pour déclencher une activation d'un signal d'alarme (A) sur la base de l'augmentation ou de la diminution identifiée de l'intensité de signal ; et
- ladite première unité électronique (10) étant configurée pour enregistrer une mesure d'intensité de signal pour ledit compartiment (102 ; 103) ouvrable dans la configuration fermée et la configuration ouverte et pour déterminer s'il faut déclencher l'activation du signal d'alarme (A) en réponse à une augmentation ou une diminution de l'intensité de signal.

2. Dispositif de surveillance de compartiment de véhicule selon la revendication 1, dans lequel ladite première unité électronique (10) est en outre configurée pour réaliser une mesure, dans un mode de mesure préliminaire, d'intensité de bruit radio (600) et pour établir ou entraîner l'établissement dudit seuil (500) sur la base de la mesure d'intensité de bruit radio (600).

3. Dispositif de surveillance de compartiment de véhicule selon la revendication 2, dans lequel la première unité électronique (10) est configurée pour dériver une valeur de bruit de référence à partir de la mesure d'intensité de bruit radio et pour établir le seuil (500) pour qu'il soit basé sur la valeur de bruit de référence.

4. Dispositif de surveillance de compartiment de véhicule selon la revendication 3, dans lequel la valeur de bruit de référence est dérivée à l'aide d'une ou de plusieurs parmi : une valeur moyenne, une valeur médiane, une valeur maximale, une valeur de crête, une valeur de crête à crête et une valeur quadratique moyenne pour l'ensemble ou certaines des valeurs de mesure de bruit obtenues à partir de la mesure d'intensité de bruit radio.

5. Dispositif de surveillance de compartiment de véhicule selon l'une quelconque des revendications précédentes, dans lequel la mesure d'intensité de bruit radio (600) est réalisée sur une fenêtre de mesure d'une longueur prédéterminée, de moins de 1 minute, ou de moins de 45 secondes, ou de moins de 30 secondes.

6. Dispositif de surveillance de compartiment de véhicule selon l'une quelconque des revendications précédentes, comprenant une première configuration fonctionnelle armée dans lequel, dans la première configuration fonctionnelle armée, le module récepteur (12) est activé pour recevoir ledit signal radio (200), et une deuxième configuration non armée dans lequel, dans la deuxième configuration non armée, le module récepteur (12) est désactivé ; ladite première unité électronique (10) étant configurée pour réaliser la mesure de ladite intensité de bruit radio (600) après le passage à ladite première configuration fonctionnelle armée et lorsqu'il ou elle est dans ledit mode de mesure préliminaire ledit dispositif ou ladite première unité électronique (10) est configuré pour réinitialiser ledit seuil (500) après chaque passage à ladite deuxième configuration non armée.

7. Dispositif de surveillance de compartiment de véhicule selon l'une quelconque des revendications précédentes, comprenant un dispositif d'alarme sonore (30), relié fonctionnellement à ladite première unité électronique (10) pour recevoir, lorsqu'il est émis, ledit signal d'alarme (A) ; ledit dispositif d'alarme sonore (30) étant configuré pour produire un son audible lors de la réception dudit signal d'alarme (A).

8. Dispositif de surveillance de compartiment de véhicule selon l'une quelconque des revendications précédentes, dans lequel ladite première unité électronique (10) comprend en outre un module émetteur (14), configuré pour émettre un signal radio (200) vers un récepteur distant et pour inclure au moins une fois dans ledit signal radio (200) émis des données électroniques comprenant un indicateur d'intensité de signal radio.

9. Dispositif de surveillance de compartiment de véhicule selon l'une quelconque des revendications précédentes, dans lequel la première unité électronique (10) est configurée pour recevoir un signal radio (200) comprenant, lui, des données électroniques comprenant des mesures d'intensité de signal radio (200), et est configurée pour extraire ladite mesure d'intensité de signal radio (200) à partir dudit signal radio (200) et pour ensuite produire en sortie un signal d'alarme (A) à une réception dudit signal radio (200) ayant une intensité inférieure, ou supérieure, audit seuil (500).

10. Système de surveillance de compartiment de véhicule, comprenant :
- une première unité électronique (10), selon une ou plusieurs des revendications précédentes ;
- une deuxième unité électronique (20), configurée pour être installée dans le compartiment (102 ; 103) du véhicule (100) et comprenant un module émetteur (24) configuré pour transmettre le signal radio (200) à la première unité électronique (10).

11. Procédé de surveillance de compartiment de véhicule, comprenant :
- la réception d'un signal radio (200) émis par une unité électronique distante installée dans un compartiment (102 ; 103) ouvrable d'un véhicule (100), ladite réception étant réalisée par un module récepteur (12) d'une première unité électronique (10) configurée pour être installée dans un compartiment d'un véhicule (100) ;
- le calcul ou la mesure d'une intensité de signal pour le signal radio (200) reçu, le calcul ou la mesure d'une autre intensité de signal pour le signal radio (200) reçu, et la comparaison électronique et automatique de l'intensité de signal mesurée, de l'autre intensité de signal mesurée et d'un seuil (500) prédéfini d'intensité de signal radio, et l'identification d'une augmentation ou d'une diminution de l'intensité de signal sur la base de la comparaison, ladite intensité de signal étant utilisée en tant qu'indicateur du fait que le compartiment (102 ; 103) est dans une configuration ouverte ou fermée,
- le déclenchement d'une activation d'un signal d'alarme (A) sur la base de l'augmentation ou de la diminution identifiée de l'intensité de signal, et
- l'enregistrement d'une mesure d'intensité de signal pour ledit compartiment (102 ; 103) ouvrable dans la configuration fermée et la configuration ouverte et pour déterminer s'il faut déclencher l'activation du signal d'alarme (A) en réponse à une augmentation ou une diminution de l'intensité de signal.

12. Procédé selon la revendication 11, comprenant en outre le déclenchement de l'activation du signal d'alarme dans le cas où ladite intensité de signal radio devient inférieure, ou supérieure, audit seuil (500), ledit déclenchement étant effectué par ladite première unité électronique (10).

13. Procédé selon la revendication 11 ou 12, comprenant la réception de l'intensité de signal à partir d'une autre unité électronique (20), installée à distance vis-à-vis de ladite première unité électronique (10) ;
le procédé comprend en outre le déclenchement de l'activation du signal d'alarme (A) lorsqu'à la fois lesdites données d'intensité de signal et ladite autre intensité de signal mesurée sont inférieures, ou supérieures, audit seuil (500).

14. Procédé selon l'une des revendications 11 à 13 dans lequel ledit signal radio (200) est émis dans une bande de fréquence ; dans lequel ladite intensité pour le signal radio (200) reçu est mesurée dans ladite bande de fréquence.
